# EUROPEAN PATENT SPECIFICATION

(11) **EP 0 506 132 B1**
(45) Date of publication and mention of the grant of the patent: **14.02.1996**
(21) Application number: 92105441.7
(22) Date of filing: 30.03.1992
(51) Int. Cl.: B01D 53/34

(54) **Method for removal of mercury in exhaust gas**
Methode zum Beseitigen von Quecksilber aus Abgasen
Méthode pour éliminer le mercure des gaz d'échappement

(30) Priority: 29.03.1991 JP 133748/91
(43) Date of publication of application: 30.09.1992
(73) Proprietor: Oriental Technical Research Industry Co., Ltd., Saitama-ken (JP)
(72) Inventor: Suzuki, Yoshio, Omiya-shi, Saitama-ken (JP)
(74) Representative: Müller-Gerbes, Margot, Dipl.-Ing.

(56) References cited:
- PATENT ABSTRACTS OF JAPAN vol. 11, no. 369 (C-461)(2816) 2 December 1987
- PATENT ABSTRACTS OF JAPAN vol. 11, no. 369 (C-461)(2816) 2 December 1987
- CHEMICAL ABSTRACTS, vol. 83, no. 8, 25 August 1975, Columbus, Ohio, US; abstract no. 62997C, YOKOTA ET AL.: 'REMOVING TRACE AMOUNTS OF MERCURY FROM A GAS' page 284

## Description

### FIELD OF THE INVENTION

The present invention relates to a method of removing gaseous mercury contained in gases exhausted upon incineration of municipal refuse.

### BACKGROUND OF THE INVENTION

Gas exhausted upon incineration of refuse (hereinafter referred to as "exhaust gas" for the sake of brevity) is generally cooled to 250-300°C and then introduced in an electric precipitator to remove dust contained therein, and then optionally put in a gas scrubber or the like to remove heavy metals therefrom.

The gas scrubber serves to remove heavy metals from the exhaust gas using, as a gas-cleaning water, an aqueous solution of caustic soda or a washing liquid with an agent such as a heavy metal remover or scavenger mixed with such an aqueous solution.

Since many kinds of heavy metals, in particular, including mercury, are however contained in the dust recovered in the form of salts formed upon their dissolution in the cleaning water, there is a potential problem that when the dust is disposed, for example, as a land-fill, ions of the heavy metals are dissolved out again in rainwater or the like and entrapped in underground water and/or river water.

Besides, when exhaust gas containing chlorides is introduced in an electric precipitator, noxious dioxin is formed.

Although an electric precipitator is generally used as a dust collector, its cost of equipment is enormous.

A method for removing mercury contained in combustion exhaust gas at 120-600°C by spraying aqueous slurry or an aqueous solution of a reactant in the exhaust gas and thereafter collecting a mercuric reaction product by a bag filter is disclosed in JP-A-62140628 and JP-A-62140629. As reactant is used an aqueous solution of sulfur sol and dithiocarbamic acid or the like, if necessary the reactant of powder of sulfur and FeS or the like being additionally injected.

Further, in CHEMICAL ABSTRACTS, vol. 83, no. 8, 25 August 1975, Columbus, Ohio, US; abstract no. 62997C, Yokota et al.: "Removing trace amounts of mercury from a gas", page 284 a method is described for removing trace amounts of mercury from a gas with an organic compound which is a mercaptan or a mercaptide being dissolved in an organic solvent or with an organic compound used as a slurry like Na diethyldithiocarbamate, Na dibutyldithiocarbamate, L-cysteine or piperidiniumpentamethylenedithiocarbamate or urea.

### SUMMARY OF THE INVENTION

It is therefore an object of this invention to provide a method of removing mercury, which permits the formation of salts of mercury in such a form that they are not dissolved out again in rainwater or the like, and also the removal of dust without using any electric precipitators by which noxious substances such as dioxin may be formed.

According to the present invention, there is thus provided a method of removing mercury contained in a gas exhausted upon incineration of refuse by spraying the exhaust gas with a chemical agent in the form of an aqueous solution and reacting with gaseous mercury in a high-temperature atmosphere of 250-300°C to form particles of a compound consisting of the chemical agent and ionic mercury and then removing the resultant particles from the exhaust gas by a bag filter or a combined equipment of a cyclone and a bag filter, wherein the chemical agent is a compound selected from the group consisting of sodium piperidine dithiocarbamate, ammonium dithiocarbamate compounds, aliphatic polydithiocarbamic compounds and sodium pyrrolidinedithiocarbamate.

The method of the present invention may be performed without using any electric precipitators.

### BRIEF DESCRIPTION OF THE DRAWING

This and other object and advantages of the present invention will become apparent from the following description with reference to the accompanying drawing, wherein:

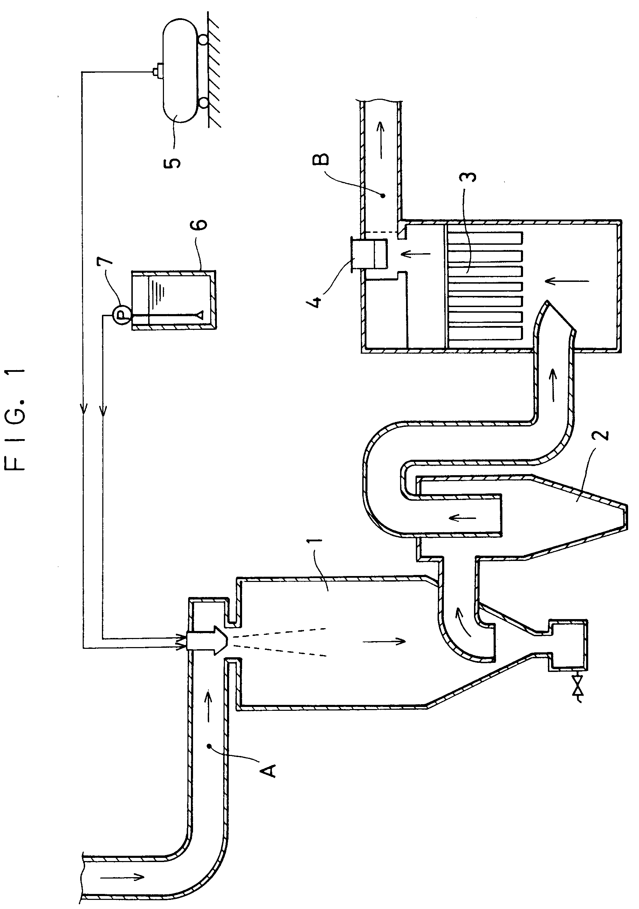

FIG. 1 schematically illustrates an exhaust gas treatment apparatus.

### DETAILED DESCRIPTION OF THE INVENTION

The chemical agent according to the present invention, which reacts with mercury, is a sort of chelating agent, and can be used in the form of liquid. Therefore, exhaust gases can be treated in a manner of gas-liquid contact by spraying such gases with this chemical agent. It can also be used in the form of a mixture with a suitable alkaline agent because it is in the form of an aqueous solution. In addition, the chemical agent of this invention does not show any toxicity even when it touches the human body and hence is riskless.

When mercury ions or gaseous mercury comes into contact with the chemical agent according to this invention in a high-temperature atmosphere of 250-300°C, they are reacted with each other to form a stable chelate compound. This compound is hardly soluble in water.

As examples of the chemical agent useful in the practice of this invention, may be mentioned in addition to claim 1 ammonium pyrrolidinedithiocarbamate, ammonium diethyldithiocarbamate and ammonium thiazinedithiocarbamate.

FIG. 1 schematically illustrates an exhaust gas treatment apparatus, which can be used in the method of the present invention and comprises a contact chamber 1, a cyclone 2, a bag filter 3, an induced draft fan 4, an air compressor 5, a chemical tank 6 and a metering pump 7.

The temperature of the exhaust gas reaches 800-900°C, but is lowered to 250-300°C after caused to pass through a heat exchanger. In FIG 1, the exhaust gas at this temperature is introduced in the contact chamber 1 through a duct, on which a measuring point A for untreated exhaust gas has been provided, and is brought into contact with the chemical agent of this invention there to react them. The exhaust gas is then placed in the cyclone 2 to remove coarse dust therefrom. The dust is collected at the bottom of the cyclone 2 and taken out through an opening provided at the bottom of the cyclone 2. The exhaust gas was then introduced in the bag filter 3 by which fine particles in the exhaust gas are all but trapped. The exhaust gas is then caused to pass through a measuring point B for treated exhaust gas to discharge it through a stack to the atmosphere.

As with gaseous mercury, heavy metals other than mercury, for example, iron, cadmium, lead, copper, zinc, cobalt, nickel, etc., which are contained in the fly ash, may also react with the chemical agent sprayed upon the contact of the exhaust gas with the chemical agent in the contact chamber 1 according to the present invention to form their corresponding chelate compounds. It is therefore possible to treat these metals equally to mercury because the chelate compounds thus formed are hardly soluble in water.

### ADVANTAGES OF THE INVENTION

According to the present invention, mercury is contained in the form of chelate compounds insoluble in water in the dust though it has been contained in the form of salts soluble in water in the dust in the conventional methods. These chelate compounds are hardly dissolved out in water and hence do not induce a phenomenon of secondary pollution such that when the dust containing them is disposed, for example, as a land-fill, metal ions are dissolved out again in rainwater or the like and entrapped in underground water and/or river water. The chemical agent can also be used in the form of a mixture with a suitable alkaline agent because it is in the form of an aqueous solution, so that the neutralization of acidic substances in the exhaust gas can also be effected at the same time.

Since the chemical agent can be used in the form of liquid, the exhaust gas can be treated in a manner of gas-liquid contact by spraying it with this chemical agent into the contact chamber. Therefore, any expensive equipment such as an electric precipitator is not required. No use of this electric precipitator makes a potential problem that dioxin may be formed in the electric precipitator eliminated.

### EMBODIMENTS OF THE INVENTION

The present invention will hereinafter be described in more detail by the following examples.

### Example 1:

The flow rate of an exhaust gas was set to 5 Nm³/min to introduce it into a contact chamber 1 of the apparatus shown in FIG. 1. A chemical agent was sprayed at a rate corresponding to that of mercury in the exhaust gas in the contact chamber 1. The chemical agent used was a 10% aqueous solution of sodium piperidinedithiocarbamate. The spray rate of this agent was controlled to 350 ml/min to continuously operate the apparatus for 5 hours. After the beginning of the spraying, respective exhaust gas samples were taken out from measuring points A and B for untreated and treated exhaust gas as shown in FIG. 1 to analyze them for mercury. As a result, it was found that the total concentration of mercury changed from 0.856 mg/Nm³ before the treatment to 0.008 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.462 g/kg of mercury was dissolved out of the dust obtained without using the chemical agent according to the present invention and containing mercury at the total concentration of 1.25 g/kg. On the other hand, 0.002 g/kg of mercury was found to be dissolved out as a result of the same determination as described above on the dust obtained by conducting the treatment of the present invention with the chemical agent according to this invention and containing mercury at the total concentration of 1.846 g/kg.

### Example 2:

Exhaust gas treatment was performed in the same manner as in Example 1 except that a 10% aqueous solution of ammonium pyrrolidinedithiocarbamate was used in place of the 10% aqueous solution of sodium piperidinedithiocarbamate in Example 1. Exhaust gas samples taken out from the same measuring points as in Example 1 were analyzed for the concentration of mercury in the same manner as in Example 1. As a result, it was found that the total concentration of mercury changed from 0.613 mg/Nm³ before the treatment to 0.0008 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.583 g/kg of mercury was dissolved out of the dust obtained without using the chemical agent according to the present invention and containing mercury at the total concentration of 1.124 g/kg. On the other hand, 0.0006 g/kg of mercury was found to be dissolved out as a result of the same determination as described above on the dust obtained by conducting the treatment of the present invention with the chemical agent according to this invention and containing mercury at the total concentration of 1.794 g/kg.

### Example 3:

Exhaust gas treatment was performed in the same manner as in Example 1 except that a 10% aqueous solution of sodium ethylenebisdithiocarbamate was used in place of the 10% aqueous solution of sodium piperidinedithiocarbamate in Example 1. Exhaust gas samples taken out from the same measuring points as in Example 1 were analyzed for the concentration of mercury in the same manner as in Example 1. As a result, it was found that the total concentration of mercury changed from 0.778 mg/Nm³ before the treatment to 0.015 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.546 g/kg of mercury was dissolved out of the dust obtained without using the chemical agent according to the present invention and containing mercury at the total concentration of 1.224 g/kg. On the other hand, 0.006 g/kg of mercury was found to be dissolved out as a result of the same determination as described above on the dust obtained by conducting the treatment of the present invention with the chemical agent according to this invention and containing mercury at the total concentration of 1.833 g/kg.

### Example 4:

Exhaust gas treatment was performed in the same manner as in Example 1 except that a 10% aqueous solution of tris(dithiocarboxysodium)diethylenetriamine was used in place of the 10% aqueous solution of sodium piperidinedithiocarbamate in Example 1. Exhaust gas samples taken out from the same measuring points as in Example 1 were analyzed for the concentration of mercury in the same manner as in Example 1. As a result, it was found that the total concentration of mercury changed from 0.422 mg/Nm³ before the treatment to 0.009 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.358 g/kg of mercury was dissolved out of the dust obtained without using the chemical agent according to the present invention and containing mercury at the total concentration of 0.899 g/kg. On the other hand, 0.003 g/kg of mercury was found to be dissolved out as a result of the same determination as described above on the dust obtained by conducting the treatment of the present invention with the chemical agent according to this invention and containing mercury at the total concentration of 0.976 g/kg.

### Example 5:

The apparatus shown in FIG. 1 was continuously operated for 5 hours by using, as a chemical agent, a 10% aqueous solution of sodium piperidinedithiocarbamate and controlling the spray rate of this agent to 420 ml/min. After the beginning of the spraying, respective exhaust gas samples were taken out from the measuring points A and B for untreated and treated exhaust gas as shown in FIG. 1 to analyze for mercury. As a result, it was found that the total concentration of mercury changed from 1.156 mg/Nm³ before the treatment to 0.001 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.342 g/kg of mercury was dissolved out of the dust obtained without using the chemical agent according to the present invention and containing mercury at the total concentration of 1.14 g/kg. On the other hand, 0.0005 g/kg of mercury was found to be dissolved out as a result of the same determination as described above on the dust obtained by conducting the treatment of the present invention with the chemical agent according to this invention and containing mercury at the total concentration of 1.796 g/kg.

### Example 6:

Exhaust gas treatment was performed in the same manner as in Example 5 except that a 10% aqueous solution of ammonium diethyldithiocarbamate was used in place of the 10% aqueous solution of sodium piperidinedithiocarbamate in Example 5. Exhaust gas samples taken out from the same measuring points as in Example 5 were analyzed for the concentration of mercury in the same manner as in Example 1. As a result, it was found that the total concentration of mercury changed from 0.089 mg/Nm³ before the treatment to 0.001 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.059 g/kg of mercury was dissolved out of the dust obtained without using the chemical agent according to the present invention and containing mercury at the total concentration of 0.136 g/kg. On the other hand, 0.0006 g/kg of mercury was found to be dissolved out as a result of the same determination as described above on the dust obtained by conducting the treatment of the present invention with the chemical agent according to this invention and containing mercury at the total concentration of 0.224 g/kg.

### Example 7:

Exhaust gas treatment was performed in the same manner as in Example 5 except that a 10% aqueous solution of ammonium thiazanedithiocarbamate was used in place of the 10% aqueous solution of sodium piperidinedithiocarbamate in Example 5. Exhaust gas samples taken out from the same measuring points as in Example 5 were analyzed for the concentration of mercury in the same manner as in Example 1. As a result, it was found that the total concentration of mercury changed from 0.338 mg/Nm³ before the treatment to 0.0009 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.113 g/kg of mercury was dissolved out of the dust obtained without using the chemical agent according to the present invention and containing mercury at the total concentration of 0.476 g/kg. On the other hand, 0.0009 g/kg of mercury was found to be dissolved out as a result of the same determination as described above on the dust obtained by conducting the treatment of the present invention with the chemical agent according to this invention and containing mercury at the total concentration of 0.512 g/kg.

### Example 8:

Exhaust gas treatment was performed in the same manner as in Example 5 except that a 10% aqueous solution of sodium pyrrolidinedithiocarbamate was used in place of the 10% aqueous solution of sodium piperidinedithiocarbamate in Example 5. Exhaust gas samples taken out from the same measuring points as in Example 6 were analyzed for the concentration of mercury in the same manner as in Example 1. As a result, it was found that the total concentration of mercury changed from 0.934 mg/Nm³ before the treatment to 0.0007 mg/Nm³ after the treatment.

Further, the amount of mercury dissolved out of the dust in the exhaust gas, which had been collected at the bottom of a cyclone 1 and the interior of a bag filter 3, was determined in accordance with JIS-K-0102. As a result, it was found that 0.334 g/kg of mercury was dissolved out of the dust obtained without using the chemical agent according to the present invention and containing mercury at the total concentration of 1.153 g/kg. On the other hand, 0.0003 g/kg of mercury was found to be dissolved out as a result of the same determination as described above on the dust obtained by conducting the treatment of the present invention with the chemical agent according to this invention and containing mercury at the total concentration of 1.396 g/kg.

## Claims

1. A method of removing mercury contained in a gas exhausted upon incineration of refuse by spraying the exhaust gas with a chemical agent in the form of an aqueous solution and reacting with gaseous mercury in a high-temperature atmosphere of 250-300°C to form particles of a compound consisting of the chemical agent and ionic mercury and then removing the resultant particles from the exhaust gas by a bag filter or a combined equipment of a cyclone and a bag filter, wherein the chemical agent is a compound selected from the group consisting of sodium piperidine dithiocarbamate, ammonium dithiocarbamate compounds, aliphatic polydithiocarbamic compounds and sodium pyrrolidinedithiocarbamate.

2. The method as claimed in claim 1, wherein ammonium dithiocarbamate compounds include ammonium pyrrolidinedithiocarbamate, ammonium diethyldithiocarbamate, and ammonium thiazinedithiocarbamate.

## Patentansprüche

1. Verfahren zum Entfernen von Quecksilber, enthalten in einem Abgas, das bei der Verbrennung von Abfall freigesetzt wird, durch Besprühen des Abgases mit einem chemischen Mittel in Form einer wässrigen Lösung und Eingehen einer Reaktion mit gasförmigem Quecksilber in einer Hochtemperaturatmosphäre von 250-300°C, um Partikel einer Verbindung, bestehend aus dem chemischen Mittel und ionischem Quecksilber zu bilden und dann Entfernen der erhaltenen Partikel aus dem Abgas durch einen Beutelfilter oder eine kombinierte Anlage aus einem Zyklon und einem Beutelfilter, wobei das chemische Mittel eine Verbindung ist, ausgewählt aus der aus Natrium-Piperidindithiocarbamat, Ammonium-Dithiocarbamatverbindungen, aliphatischen polydithiocarbamischen Verbindungen und Natrium-Pyrrolidindithiocarbamat bestehenden Gruppe.

2. Verfahren nach Anspruch 1,
wobei Ammonium-Dithiocarbamatverbindungen Ammonium-Pyrrolidindithiocarbamat, Ammonium-Diethyldithiocarbamat und Ammonium-Thiazindithiocarbamat einschließen.

## Revendications

1. Procédé d'élimination du mercure contenu dans un gaz d'éjection lors de l'incinération des déchets en aspergeant le gaz d'éjection avec un agent chimique sous forme d'une solution aqueuse et en faisant réagir le mercure gazeux dans une atmosphère à température élevée de 250-300°C pour former des particules d'un composé constitué de l'agent chimique et du mercure ionique et ensuite en éliminant les particules résultantes à partir du gaz d'éjection par un filtre à manche ou un équipement combiné d'un cyclone et d'un filtre à manche, dans lequel l'agent chimique est un composé choisi parmi le groupe constitué du pipéridinedithiocarbamate de sodium, de composés dithiocarbamate d'ammonium, de composés polydithiocarbamiques aliphatiques et du pyrrolidinedithiocarbamate de sodium.

2. Procédé conformément à la revendication 1, dans lequel les composés dithiocarbamates d'ammonium incluent le pyrrolidinedithiocarbamate d'ammonium, le diéthyldithiocarbamate d'ammonium et le thiazinedithiocarbamate d'ammonium.
